# EUROPEAN PATENT APPLICATION

(11) **EP 4 354 888 A1**
(43) Date of publication of application: **17.04.2024**
(21) Application number: 22819361.1
(22) Date of filing: 25.05.2022
(51) Int. Cl.: H04N 21/6402

(54) **ROUTING METHOD AND APPARATUS, DEVICE, AND STORAGE MEDIUM**

(30) Priority: 10.06.2021 CN 202110648066
(71) Applicant: Fibocom Wireless Inc., Shenzhen, Guangdong 518051 (CN)
(72) Inventor: ZHAO, Fei, Shenzhen, Guangdong 518051 (CN)
(74) Representative: Botti & Ferrari S.p.A.
(86) International application number: PCT/CN2022/094852
(87) International publication number: WO 2022/257763

(57) **Abstract**

Disclosed are a routing method and apparatus, a device and a storage medium. The method includes receiving a routing request from a device through a target Ethernet interface; choosing an IP address corresponding to an interface identifier of the target Ethernet interface based on a binding relationship between an interface identifier of an Ethernet interface and an IP address; and constructing a routing response corresponding to the routing request, and returning the routing response to the device.

## Description

### CROSS REFERENCE TO RELATED APPLICATIONS

The present application claims priority to Chinese Patent Application No. 202110648066.1, entitled "Routing Method and Apparatus, Device and Storage Medium", filed on 10 June 2021 to China National Intellectual Property Administration, which is incorporated by reference in its entirety.

### TECHNICAL FIELD

The present disclosure relates to the field of computers, and in particular, to a routing method and apparatus, a device and a storage medium.

### BACKGROUND

When a 5G chip is designed for use as routers, a user terminal will have a demand for ip-passthrough. At present, when implementing ip-passthrough, a TCP/IP protocol stack inside a chip dynamically allocates an IP address to the user terminal and transmits data through the IP address.

However, in a scenario of 5G high-speed transmission, when the TCP/IP protocol stack needs to allocate IP addresses to multiple user terminals, a significant burden will be caused on a processor of the chip, affecting a processing speed.

### SUMMARY

In the first aspect, the present disclosure relates to a routing method, including:
receiving a routing request from a device through a target Ethernet interface, wherein the routing request carries an interface identifier of the target Ethernet interface;
choosing an IP address corresponding to the interface identifier of the target Ethernet interface based on the binding relationship between an interface identifier of an Ethernet interface and the IP address; and
constructing a routing response corresponding to the routing request, and returning the routing response to the device, wherein the routing response carries the IP address.

In some embodiments, before choosing the IP address corresponding to the interface identifier of the target Ethernet interface based on the binding relationship between the interface identifier of the Ethernet interface and the IP address, the method further includes:
acquiring to-be-processed data;
judging whether the to-be-processed data including a DHCP packet; and
confirming, if yes, that the to-be-processed data is the routing request.

In some embodiments, after returning the routing response to the device, the method further includes:
receiving a first data access request from the device through the target Ethernet interface, wherein the first data access request carries the IP address;
acquiring a first destination IP address from an arp cache list corresponding to the first data access request from;
choosing a network card corresponding to the interface identifier of the target Ethernet interface; and
forwarding the first data access request to the first destination IP address through the network card.

In some embodiments, acquiring the first destination IP address from the arp cache list corresponding to the first data access request:
acquiring a data packet in the first data access request;
acquiring a domain name in the data packet; and
finding the first destination IP address from the arp cache list corresponding to the domain name .

In some embodiments, after returning the routing response to the device, the method further includes:
receiving a second data access request from the device, wherein the second data access request carries a second destination IP address belonging to a router address; and
forwarding the second data access request to the second destination IP address through a TCP/IP protocol stack.

In the second aspect, the present disclosure relates to a routing system, including:
a router and a device, wherein the router includes at least one Ethernet interface, a kernel and at least one network card; the Ethernet interface and the network card have a one-to-one corresponding relationship; and the at least one Ethernet interface includes a target Ethernet interface;
the device is configured to send a routing request to the target Ethernet interface;
the target Ethernet interface is configured to receive the routing request, add an interface identifier of the target Ethernet interface into the routing request, and forward the routing request carrying the interface identifier to the kernel; and
the kernel is configured to choose an IP address corresponding to the interface identifier of the target Ethernet interface based on a binding relationship between an interface identifier of the Ethernet interface and the IP address, construct a routing response corresponding to the routing request, and return the routing response to the device, wherein the routing response carries the IP address.

In some embodiments, the router furtherincludes:
a TCP/IP protocol stack; wherein
the device is further configured to send a data access request to the router through the target Ethernet interface, wherein the data access request carries a destination IP address belonging to a router address;
the kernel is configured to receive the data access request and forward the data access request to the TCP/IP protocol stack; and
the TCP/IP protocol stack is configured to acquire and return the routed data corresponding to the destination IP address.

In a third aspect, the present disclosure relates to a routing apparatus, including:
a receiving module, configured to receive a routing request from a device through a target Ethernet interface, wherein the routing request carries an interface identifier of the target Ethernet interface;
a choosing module, configured to choosing an IP address corresponding to the interface identifier of the target Ethernet interface based on a binding relationship between an interface identifier of an Ethernet interface and the IP address; and
a constructing module, configured to construct a routing response corresponding to the routing request, and return the routing response to the device, wherein the routing response carries the IP address.

In a fourth aspect, the present disclosure relates to an electronic device, including: a processor, a memory and a communication bus, wherein the processor and the memory communicate with each other through the communication bus;
the memory is configured to store a computer program; and
the processor is configured to execute the computer program stored in the memory to implement the routing method described in the first aspect.

In a fifth aspect, the present disclosure relates to a computer readable storage medium, storing a computer program. The computer program, when executed by a processor, implements the routing method described in the first aspect.
a binding relationship between an interface identifier of an Ethernet interface and the IP address is preset in the present disclosure, and when the target Ethernet interface receives the routing request of the device, the IP address for the device may be directly determined according to the binding relationship. Since an IP address is preset for each Ethernet interface in each chip, when the device has the routing request, the IP address for the device may be determined according to the Ethernet interface that the device accesses, without the need to dynamically allocate the IP address for the device from an IP pool. Therefore, there is no need to set up a DHCP server for each data link, thereby reducing the consumption of memory and CPU resources.

### BRIEF DESCRIPTION OF THE DRAWINGS

Accompanying drawings here are incorporated into the specification and constitute a part of the specification, showing embodiments consistent with the present disclosure, and are used together with the specification to explain the principle of the present disclosure.

In order to explain technical solutions of the present disclosure more clearly, the accompanying drawings that need to be used in the present disclosure will be briefly introduced below. Apparently, for those of ordinary skill in the art, on the premise of no creative labor, other accompanying drawings may also be obtained according to these accompanying drawings.
Fig. 1 is a schematic structural diagram of an interior of a 5G chip provided by an embodiment of the present disclosure.
Fig. 2 is a schematic diagram of a corresponding relationship between different DHCP servers and links provided by an embodiment of the present disclosure.
Fig. 3 is schematic flow chart of a routing method provided by an embodiment of the present disclosure.
Fig. 4 is a schematic flow chart of another routing method provided by an embodiment of the present disclosure.
Fig. 5 is a schematic structural diagram of a routing system provided by an embodiment of the present disclosure.
Fig. 6 is a schematic structural diagram of a routing apparatus provided by an embodiment of the present disclosure.
Fig. 7 is a schematic structural diagram of an electronic device provided by an embodiment of the present disclosure.

### DETAILED DESCRIPTION

In order to make objectives, technical solutions and advantages of embodiments of the present disclosure clearer, the technical solutions in the embodiments of the present disclosure will be clearly and completely described below in conjunction with accompanying drawings. Apparently, the described embodiments are some rather than all of the embodiments of the present disclosure. Based on the embodiments disclosed in this document, all other embodiments obtained by the technical personnel in the same field without applying creative labor fall within the scope of protection of the present disclosure.

It should be understood that steps in the schematic flow charts shown in the present disclosure are displayed sequentially as indicated by arrows, but these steps are not necessarily executed sequentially in the sequence indicated by the arrows. Unless otherwise explicitly specified in this specification, execution of the steps is not strictly limited, and the steps may be executed in other sequences. Moreover, at least part of the steps in the flow charts may include a plurality of sub-steps or a plurality of stages, these sub-steps or stages are not necessarily executed completely at the same moment, but may be executed at different moments, and the execution sequence thereof is not necessarily sequential, but may be executed alternatively with other steps or at least part of sub-steps or stages in other steps.

A 5G chip is taken as an example below to illustrate embodiments in the related art.

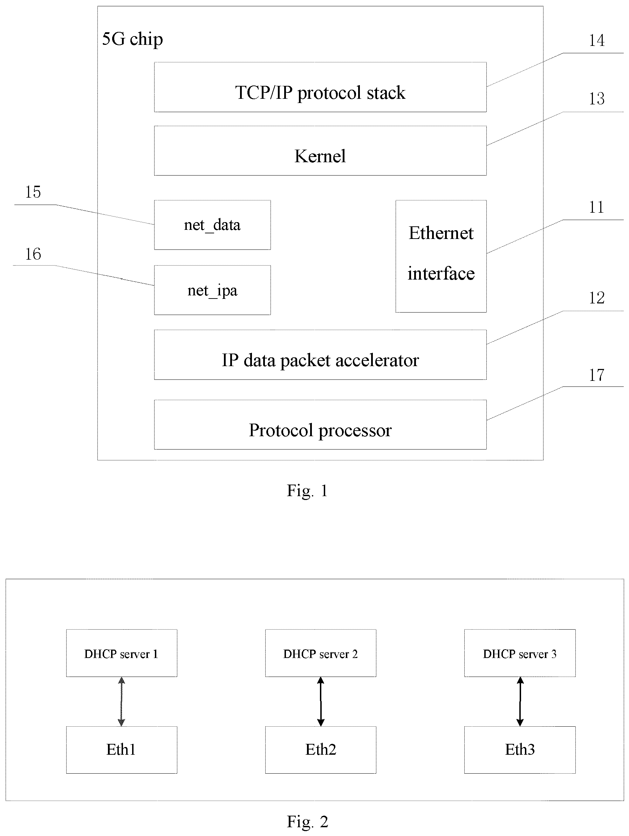

Please refer to Fig. 1, which is a schematic structural diagram of an interior of a 5G chip. The 5G chip includes:
an Ethernet (Eth) interface 11, an ip packet accelerator (IPA) 12, a kernel 13, a TCP/IP protocol stack 14, net_data 15, net_ipa 16, and a Modem (including protocol processor) 17.

The Ethernet interface 11 includes at least one Eth interface, and different Eth interfaces have different interface identifiers.

Exemplarily, the interface identifiers of the Eth interfaces may be represented by interface numbers of the Eth interfaces.

For example, the Eth interface in the Ethernet interface 11 may be represented as Ethn, and n is a positive integer.

The net_data 15 and net_ipa 16 are different network cards respectively, and the net_data 15 and net_ipa 16 have a one-to-one corresponding relationship. In this embodiment, different network cards may be distinguished by media access control (MAC) addresses of the network cards.

The net_data 15 consists of at least one net_data, different net_data may be represented by net_datan, and n is a positive integer.

Similarly, the net_ipa 16 consists of at least one net_ipa, different net_ipa may be represented by net_ipan, and n is a positive integer.

A user terminal is taken as an example below to describe a data link inside a chip when the user terminal performs networking, which is specifically shown as follows:
No.1 user terminal sends data to an Eth0 interface through No. 1 network cable ;
after receiving the data, the Eth0 interface forwards the data to the IPA 12, and the data is forwarded by the IPA 12 to the TCP/IP protocol stack 14;
the TCP/IP protocol stack 14 dynamically allocates an IP address to the No.1 user terminal, and forwards the data to net_data0;
the net_data0 is forwarded to the IPA 12 through net_ipa0, and the data is forwarded by the IPA 12 to a Modem 17; and
the Modem 17 sends the data to an Internet, so as to achieve the connecting between No.1 user terminal and network.

When a plurality of user terminals perform networking, a data stream inside the chip is similar to that of the case of a single user terminal. Exemplarily, two user terminals are taken as an example, and a data link inside the chip is shown as follows:
No.1 user terminal sends first data to an Eth0 interface through No.1 network cable, and No.2 terminal sends second data to an Eth1 interface through No.2 network cable;
after receiving the data, the Eth0 interface and the Eth1 interface forward the first data and the second data to an IPA 12 respectively, and the first data and the second data are respectively forwarded to a TCP/IP protocol stack 14 by the IPA 12;
the TCP/IP protocol stack 14 dynamically allocates IP addresses to the No. 1 user terminal and No.2 user terminal respectively, forwards the first data to net_data0, and forwards the second data to net_data1;
the net_data0 forwards the first data to the IPA 12 through net_ipa0, the net_data1 forwards the second data to the IPA 12 through net_ipa1, and the first data and the second data are forwarded by the IPA 12 to a Modem 17; and
the Modem 17 sends the first data and the second data to Internet respectively, so as to achieve network connecting of No. 1 user terminal and No.2 user terminal.

In the TCP/IP protocol stack 14, a dynamic host configuration protocol (DHCP) server dynamically allocates the IP address to the user terminal from an IP pool. Considering that the DHCP server can only allocate IP addresses within the same network segment, therefore, a plurality of DHCP servers are set in the TCP/IP protocol stack 14, each DHCP server only corresponds to one data link, each DHCP server corresponds to one IP pool, and the IP pool has at least one IP address.

Please refer to Fig. 2, in which the TCP/IP protocol stack 14 including 3 DHCP servers is taken as an example to illustrate a corresponding relationship between different DHCP servers and each data link.

A DHCP server 1 is bound with an Eth1 interface, and therefore, when a user terminal accesses through the Eth1 interface, an IP address is allocated by the DHCP server 1 to the user terminal; a DHCP server 2 is bound with an Eth2 interface, and therefore, when the user terminal accesses through the Eth2 interface, the IP address is allocated by the DHCP server 2 to the user terminal; and a DHCP server 3 is bound with an Eth3 interface, and therefore, when the user terminal accesses through the Eth3 interface, the IP address is allocated by the DHCP server 3 to the user terminal.

Based on a dynamic allocation process of the IP addresses in the above TCP/IP protocol stack 14, when the TCP/IP protocol stack 14 dynamically allocates the IP address to the user terminal 1 (or user terminal 2), the DHCP server 1 (or DHCP server 2) corresponding to the Eth0 (or Eth1) interface that the user terminal 1 ( or user terminal 2) accesses is determined, and the IP address in the corresponding IP pool is allocated by the DHCP server 1 ( or DHCP server 2) to the user terminal 1 ( or user terminal 2).

In a research process of the solution of the above related art, the inventor finds that one DHCP server is set in the TCP/IP protocol stack for each data link to allocate the IP addresses for the user terminals that access different data links, resulting in excessive consumption of memory and CPU resources.

In order to solve the above technical problem, the present application provides a routing method. The method is applied to a kernel driver in a chip kernel.

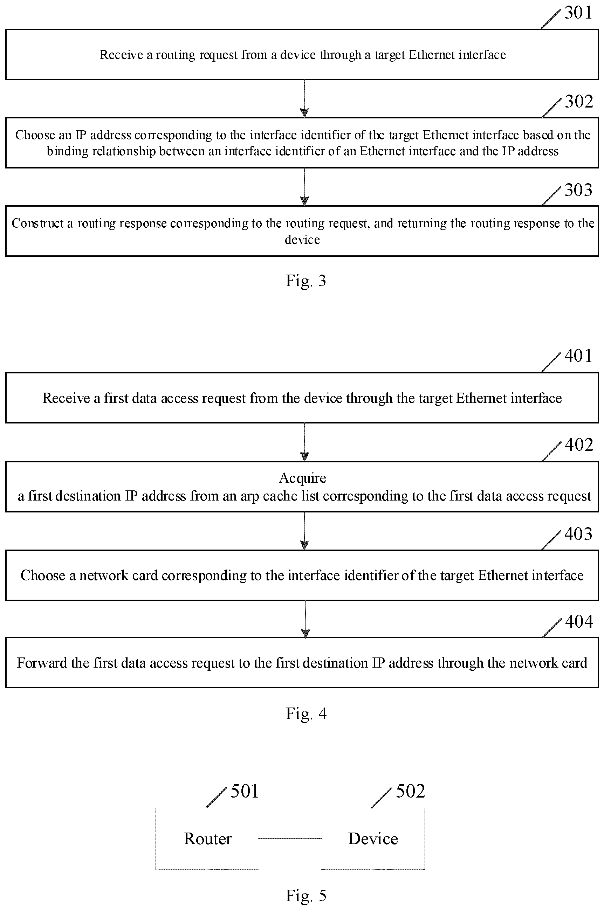

In some embodiments, as shown in Fig. 3, the method may include the following steps:
step 301, a routing request of a device is received through a target Ethernet interface, wherein the routing request carries an interface identifier of the target Ethernet interface.

The routing request is used for requesting the allocation of an IP address.

The device may access a chip through any idle Ethernet interface in the chip, so the target Ethernet interface is any idle Ethernet interface in the chip.

The interface identifier of the target Ethernet interface may be an interface number of the target Ethernet interface. When the target Ethernet interface forwards the routing request of the device to the kernel driver, the interface identifier of the target Ethernet interface may be added into the routing request.

Exemplarily, in this embodiment, the routing request may be a DHCP packet. In this case, when the kernel driver receives to-be-processed data, whether the to-be-processed data is the DHCP packet may be judged, and when the to-be-processed data is confirmed to be the DHCP packet, it is determined that the routing request is received from the target Ethernet interface.

Step 302, an IP address corresponding to the interface identifier of the target Ethernet interface is chosen based on a binding relationship between an interface identifier of an Ethernet interface and the IP address.

In this embodiment, a routing relationship table is pre-established in the kernel driver, and the routing relationship table stores the binding relationship between the interface identifier of the Ethernet interface and the IP address. Therefore, by querying the binding relationship between the interface identifier of the Ethernet interface and the IP address which is preset in the routing relationship table, the IP address corresponding to the interface identifier of the target Ethernet interface may be confirmed.

Step 303, a routing response corresponding to the routing request is constructed, and the routing response is returned to the device. The routing response carries the IP address.

When the routing request is the DHCP packet, the constructed routing response is a DHCP return packet.

In the technical solution provided by the present application, the binding relationship between the interface identifier of the Ethernet interface and the IP address is preset, and when the target Ethernet interface receives the routing request of the device, the IP address for the device may be directly determined according to the binding relationship. Since an IP address is preset for each Ethernet interface in each chip, when the device receives the routing request, the IP address for the device may be determined according to the Ethernet interface that the device accesses, without the need to dynamically allocate an IP address to the device from an IP pool. Therefore, there is no need to set up a DHCP server for each data link, thereby reducing the consumption of memory and CPU resources.

After choosing the IP address for the device based on the above embodiments, the device may use the IP address to transmit the data, and in some embodiments, as shown in Fig. 4, the method may include the following steps:
step 401, a first data access request from a device is received through a target Ethernet interface; and
step 402, a first destination IP address from an arp cache list corresponding to the first data access request is acquired.

In this embodiment, an address resolution protocol (arp) cache list may be created in a memory driver in advance, and the arp cache list stores IP addresses of network platforms that the device has previously accessed. Therefore, when the device has the data access request, through the arp cache list, a destination IP address corresponding to the first data access request can be quickly queried, so that a data access speed is increased.

In some embodiments, a corresponding relationship between the IP addresses and domain names of the network platforms may be maintained in the arp cache list. When it is necessary to determine the first destination IP address corresponding to the first data access request, a domain name in the first data access request is acquired, and the domain name is used for querying a corresponding relationship between the IP address and the domain name in the arp cache list, so as to obtain the first destination IP address.

A domain name is a name of a certain computer or computer group used for positioning the computer during data transmission. The domain name and the IP address are mapped to each other, and the two have a one-to-one corresponding relationship.

Step 403, a network card corresponding to the interface identifier of the target Ethernet interface is chosen.

It may be understood that the network card here includes net_data and net_ipa corresponding to the target Ethernet interface.

In this embodiment, a corresponding relationship between the interface identifier of the Ethernet interface and the network card is maintained in a kernel, and therefore, the network card corresponding to the interface identifier of the target Ethernet interface may be chosen according to the corresponding relationship.

Step 404, the first data access request is forwarded to the first destination IP address through the network card.

Transmission of the first data access request inside the chip is described below in conjunction with a schematic structural diagram of an interior of the chip in Fig. 1.

A device sends a first data access request to an Eth0 interface through a network cable;
after receiving the first data access request, the Eth0 interface forwards the first data access request to a kernel;
a kernel driver in the kernel chooses a first destination IP address corresponding to the first data access request, and forwards the first data access request to a corresponding network card net_data0;
the net_data0 forwards the first data access request to an IPA 12 through net_ipa0, and the first data access request is forwarded by the IPA 12 to a Modem 17; and
the Modem 17 sends the first data access request to Internet.

Further, when a plurality of devices all have data access requests similar to the first data access request, transmission of the data access request inside the chip may be:
No. 1 device sends a data access request to an Eth0 interface through No. 1 network cable, and No.2 device sends a data access request to an Eth1 interface through No.2 network cable;
after receiving the data access requests, the Eth0 interface and the Eth1 interface forward the data access requests to a kernel respectively;
a kernel driver in the kernel chooses destination IP addresses corresponding to the data access requests respectively, forwards the data access request from the Eth0 interface to net_data0, and forwards the data access request from the Eth1 interface to net_data1;
the net_data0 forwards the data access request to an IPA 12 through net_ipa0, the net_data1 forwards the data access request to the IPA 12 through net_ipa1, and the data access requests are forwarded by the IPA 12 to a Modem 17 respectively; and
the Modem 17 sends the data access requests to Internet respectively.

In the traditional solution, during transmission, data in each path must be forwarded and processed by the TCP/IP protocol stack, and in a case of multipath transmission, there will be a large quantity of data that needs to be processed simultaneously in an uplink and a downlink. For a CPU of the 5G chip, the burden will be heavy. By adopting the technical solution of this embodiment, data transmission of the first data access request bypasses the TCP/IP protocol stack and directly reaches a corresponding link, which reduces the usage load of the CPU and improves transmission efficiency.

The 5G chip is still taken as an example. In the traditional solution for an arm chip of the 5G chip, its main frequency is 1.4 GHz. For a simple downlink rate, a CPU occupancy rate reaches 100% at a download rate of 200 Mbps, resulting in the inability to further improve the download rate capability. However, using this solution, due to the fact that the data does not pass through the Transport block during transmission, the data transmission rate may reach 2 Gbps.

In other embodiments of the present application, when the data access request of the device does not aim at Internet data on an Internet side, but router data, the data access request is no longer sent to the Internet through the network card, but is directly forwarded to the TCP/IP protocol stack by the kernel, and the router data is obtained by the TCP/IP protocol stack from an upper application.

Exemplarily, in this case, the kernel driver receives a second data access request of the device, the second data access request carries a second destination IP address belonging to a router address; and the second data access request is forwarded to the second destination IP address through the TCP/IP protocol stack.

Based on the same concept, an embodiment of the present application provides a routing system. Specific embodiments of the system may refer to the description of the method embodiments, and repetitions are omitted. In some embodiments, as shown in Fig. 5, the system mainly includes:
a router 501 and a device 502, wherein the router includes at least one Ethernet interface, a kernel and at least one network card; the Ethernet interface and the network card have a one-to-one corresponding relationship; and the at least one Ethernet interface includes a target Ethernet interface;
the device is configured to send a routing request to the target Ethernet interface;
the target Ethernet interface is configured to receive the routing request, add an interface identifier of the target Ethernet interface into the routing request, and forward the routing request carrying the interface identifier to the kernel; and
the kernel is configured to choose an IP address corresponding to the interface identifier of the target Ethernet interface based on a binding relationship between an interface identifier of the Ethernet interface and the IP address, construct a routing response corresponding to the routing request, and return the routing response to the device, wherein the routing responseincludes the IP address.

In some embodiments, the router further includes:
a TCP/IP protocol stack; wherein
the device is further configured to send a data access request to the router through the target Ethernet interface, wherein the data access request carries a destination IP address belonging to a router address;
the kernel is configured to receive the data access request and forward the data access request to the TCP/IP protocol stack; and
the TCP/IP protocol stack is configured to acquire and return the routed data corresponding to the destination IP address.

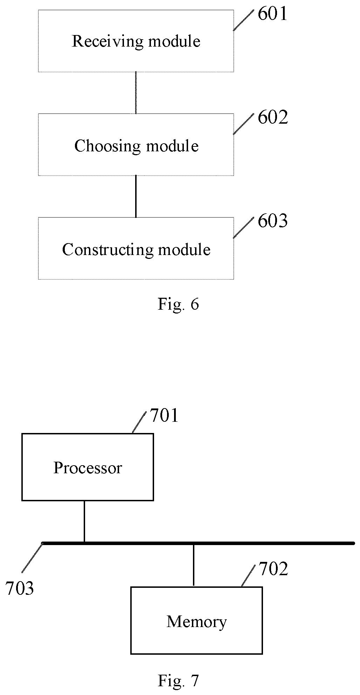

Based on the same concept, an embodiment of the present application provides a routing apparatus. Specific embodiments of the apparatus may refer to the description of the method embodiments, and repetitions are omitted. In some embodiments, as shown in Fig. 6, the apparatus mainly includes:
a receiving module 601, configured to receive a routing request from a device through a target Ethernet interface, wherein the routing request carries an interface identifier of the target Ethernet interface;
a choosing module 602, configured to choose an IP address corresponding to the interface identifier of the target Ethernet interface based on a binding relationship between an interface identifier of an Ethernet interface and the IP address; and
a constructing module 603, configured to construct a routing response corresponding to the routing request, and return the routing response to the device, wherein the routing response carries the IP address.

In some embodiments, the router is further configured to:
receive, after returning the routing response to the device, a first data access request from the device through the target Ethernet interface, wherein the first data access request carries the IP address;
acquire a first destination IP address from an arp cache list corresponding to the first data access request;
choose a network card corresponding to an interface identifier of the target Ethernet interface; and
forward the first data access request to the first destination IP address through the network card.

In some embodiments, the router is further configured to:
acquire to-be-processed data before choosing an IP address corresponding to an interface identifier of the target Ethernet interface based on a binding relationship between an interface identifier of an Ethernet interface and the IP address;
judge whether the to-be-processed data include a DHCP packet; and
confirm that the to-be-processed data is the routing request when the judging module determines that the to-be-processed data include the DHCP packet.

In some embodiments, the router is configured to:
acquire a data packet in the first data access request;
acquire a domain name in the data packet; and
find the first destination IP address from the arp cache list corresponding to the domain name.

In some embodiments, the router is further configured to:
receive a second data access request of the device after returning the routing response to the device, wherein the second data access request carries a second destination IP address belonging to a router address; and
forward the second data access request to the second destination IP address through a TCP/IP protocol stack.

It should be understood that each unit or module in the present disclosure may be all or partially implemented through software, hardware and a combination thereof. The network interface may be an Ethernet or wireless network card. The above modules or units may be embedded in or independent of a processor in a server in a hardware form, or stored in a memory in the server in a software form, so as to facilitate the processor to call and execute corresponding operations of the above all modules.

Based on the same concept, an embodiment of the present application further includes an electronic device. In some embodiments, as shown in Fig. 7, the electronic device mainly includes: a processor 701, a memory 702 and a communication bus 703. The processor 701 and the memory 702 communicate with each other through the communication bus 703. The memory 702 stores a program that may be executed by the processor 701, and the processor 701 executes the program stored in the memory 702 to implement the following steps:
a routing request from a device is received through a target Ethernet interface, the routing request carrying an interface identifier of the Ethernet interface; an IP address corresponding to an interface identifier of the target Ethernet interface is chosen based on a binding relationship between an interface identifier of an Ethernet interface and an IP address; and a routing response corresponding to the routing request is constructed, and the routing response is returned to the device, the routing response carrying the IP address.

The communication bus 703 referred in the above electronic device may be a peripheral component interconnect (PCI) standard bus, an extended industry standard architecture (EISA) bus or the like. The communication bus 703 may be divided into an address bus, a data bus, a control bus and the like. For ease of representation, only one thick line is used in Fig. 7, but it does not represent that there is only one bus or one type of bus.

The memory 702 may include a random access memory (RAM), and may also include a non-volatile memory, such as at least one disk memory. Optionally, the memory may further be at least one storage apparatus located away from the above processor 701.

The above processor 701 may be a general-purpose processor, including a central processing unit (CPU), a network processor (NP) and the like, and may also be a digital signal processor (DSP), an application specific integrated circuit (ASIC), a field-programmable gate array (FPGA) or other programmable logic devices, discrete gate or transistor logic devices, and discrete hardware components.

In yet another embodiment of the present application, a computer readable storage medium is further provided, storing a computer program. The computer program, when running on a computer, enables the computer to execute the routing method described in the above embodiments.

The above embodiment may be realized wholly or partially by software, firm ware or any combination thereof. When implemented by the software, it may be implemented wholly or partially in the form of a computer program product. The computer program product includes one or more computer instructions. When the computer instructions are loaded and executed on the computer, flows or functions described in the embodiments of the present application are wholly or partially generated. The computer may be a general-purpose computer, a special-purpose computer, a computer network or other programmable apparatuses. The computer instructions may be stored in a computer readable storage medium or transmitted from one computer readable storage medium to another computer readable storage medium. For example, the computer instructions are transmitted from one website, computer, server or data center to another website, computer, server or data center in a wired (for example, a coaxial cable, an optical fiber or a digital subscriber line (DSL)) or wireless (for example, infrared and microwave) manner. The computer readable storage medium may be any available medium capable of being accessed by a computer or include one or more data storage devices integrated by an available medium, such as a server and a data center. The available media may be magnetic media (such as a floppy disk, a hard disk and a magnetic tape), optical media (such as DVD) or semiconductor media (such as a solid state disk) and the like.

It needs to be noted that in this article, relational terms such as "first" and "second" are merely used to distinguish one entity or operation from another entity or operation, and do not necessarily require or imply any such actual relationship or order between these entities or operations. In addition, the terms "include", "comprise" or its any other variants are intended to cover non-exclusive inclusion, so that a process, method, article or device including a series of elements not merely includes those elements, but also includes other elements not clearly listed, or also includes elements inherent to this process, method, article or device. Without further restrictions, the elements defined by the statement "comprising one..." do not exclude that there are other identical elements in the process, method, article or device including the elements.

The above is only specific embodiments of the present application, enabling those skilled in the art to understand or implement the present application. The various modifications to these embodiments will be apparent to those skilled in the art, and the general principles defined in this article may be implemented in other embodiments without departing from the spirit or scope of the present application. Therefore, the present application will not be limited to these embodiments shown in this article, but rather to the widest range consistent with the principles and novel features applied for herein.

## Claims

1. A routing method, comprising:
receiving a routing request from a device through a target Ethernet interface, wherein the routing request carries an interface identifier of the target Ethernet interface;
choosing an IP address corresponding to the interface identifier of the target Ethernet interface based on the binding relationship between an interface identifier of an Ethernet interface and the IP address; and
constructing a routing response corresponding to the routing request, and returning the routing response to the device, wherein the routing response carries the IP address.

2. The method of claim 1, wherein before choosing the IP address corresponding to the interface identifier of the target Ethernet interface based on the binding relationship between the interface identifier of the Ethernet interface and the IP address, further comprising:
acquiring to-be-processed data;
judging whether the to-be-processed data comprises a DHCP packet; and
confirming, if yes, that the to-be-processed data is the routing request.

3. The method of claim 1, wherein after returning the routing response to the device, further comprising:
receiving a first data access request from the device through the target Ethernet interface, wherein the first data access request carries the IP address;
acquiring a first destination IP address from an arp cache list corresponding to the first data access request;
choosing a network card corresponding to the interface identifier of the target Ethernet interface; and
forwarding the first data access request to the first destination IP address through the network card.

4. The method of claim 3, wherein acquiring the first destination IP address from the arp cache list corresponding to the first data access request, comprises:
acquiring a data packet in the first data access request;
acquiring a domain name in the data packet; and
finding the first destination IP address from the arp cache list corresponding to the domain name.

5. The method of claim 1, wherein after returning the routing response to the device, further comprising:
receiving a second data access request from the device, wherein the second data access request carries a second destination IP address belonging to a router address; and
forwarding the second data access request to the second destination IP address through a TCP/IP protocol stack.

6. A routing system, comprising:
a router and a device, wherein the router comprises at least one Ethernet interface, a kernel and at least one network card; the Ethernet interface and the network card have a one-to-one corresponding relationship; and the at least one Ethernet interface includes a target Ethernet interface;
the device is configured to send a routing request to the target Ethernet interface;
the target Ethernet interface is configured to receive the routing request, add an interface identifier of the target Ethernet interface into the routing request, and forward the routing request carrying the interface identifier to the kernel; and
the kernel is configured to choose an IP address corresponding to the interface identifier of the target Ethernet interface based on a binding relationship between an interface identifier of the Ethernet interface and the IP address, construct a routing response corresponding to the routing request, and return the routing response to the device, wherein the routing response carries the IP address.

7. The system of claim 6, wherein the router further comprises:
a TCP/IP protocol stack; wherein
the device is further configured to send a data access request to the router through the target Ethernet interface, wherein the data access request carries a destination IP address belonging to a router address;
the kernel is configured to receive the data access request and forward the data access request to the TCP/IP protocol stack; and
the TCP/IP protocol stack is configured to acquire and return the routed data corresponding to the destination IP address.

8. A routing apparatus, comprising:
a receiving module, configured to receive a routing request from a device through a target Ethernet interface, wherein the routing request carries an interface identifier of the target Ethernet interface;
a choosing module, configured to choose an IP address corresponding to the interface identifier of the target Ethernet interface based on a binding relationship between an interface identifier of an Ethernet interface and the IP address; and
a constructing module, configured to construct a routing response corresponding to the routing request, and return the routing response to the device, wherein the routing response carries the IP address.

9. An electronic device, comprising: a processor, a memory and a communication bus, wherein the processor and the memory communicate with each other through the communication bus;
the memory is configured to store a computer program; and
the processor is configured to execute the computer program stored in the memory to implement the routing method of any one of claims 1 to 5.

10. A computer readable storage medium, storing a computer program, the computer program, when executed by a processor, implementing the routing method of any one of claims 1 to 5.
